Europäisches Patentamt

European Patent Office

Office européen des brevets

(11) Numéro de publication: **0 277 857**
**A1**

# (12) DEMANDE DE BREVET EUROPEEN

(21) Numéro de dépôt: 88400073.8

(22) Date de dépôt: 14.01.88

(51) Int. Cl.⁴: **C 01 F 7/62**

(30) Priorité: 21.01.87 FR 8700668

(43) Date de publication de la demande:
10.08.88 Bulletin 88/32

(84) Etats contractants désignés:
AT BE CH DE ES FR GB GR IT LI LU NL SE

(71) Demandeur: **ATOCHEM**
**4 & 8, Cours Michelet La Défense 10**
**F-92800 Puteaux (FR)**

(72) Inventeur: **Dugua, Jacques**
**241 Chemin des Fiachères**
**F-69390 Charly Par Vernaison (FR)**

(54) **Procédé de purification de chlorure d'aluminium.**

(57) L'invention concerne un procédé de purification du chlorure d'aluminium anhydre.

Ce procédé consiste à mettre le chlorure d'aluminium contenant des produits chlorés aromatiques en contact avec un bain de chloroaluminate de sodium contenant de la poudre d'aluminium.

EP 0 277 857 A1

**Description**

PROCEDE DE PURIFICATION DU CHLORURE D'ALUMINIUM

La présente invention concerne un procédé de purification du chlorure d'aluminium anhydre.

Le chlorure d'aluminium est utilisé comme catalyseur en chimie organique et peut servir à préparer l'aluminium. Il existe deux familles de procédés industriels, la réaction du chlore gazeux sur l'aluminium fondu et la carbochloration de l'alumine. La deuxième famille utilise la réaction de l'alumine, du chlore et d'un produit carboné pouvant être du coke ou de l'oxyde de carbone. Cependant, suivant la nature et l'origine du carbone, on trouve dans le chlorure d'aluminium obtenu, en plus de certains chlorures métalliques, des produits organiques chlorés qui peuvent être des aromatiques ou leurs produits de condensation. Il est souvent nécessaire d'utiliser du chlorure d'aluminium pur en catalyse ou pour la préparation de cosmétiques. Pour ces usages, la présence de produits organiques chlorés est très génante sinon rédhibitoire.

Quelle que soit l'origine du chlorure d'aluminium si ce dernier contient des produits organiques chlorés se pose le problème de sa purification.

Il existe plusieurs publications décrivant l'élimination des impuretés organiques contenues dans du chlorure d'aluminium.

La demande de brevet japonais 31 452/66 du 29 mars 1966 décrit la purification du chlorure d'aluminium contenant de l'hexachlorobenzène en faisant passer le mélange d'AlCl₃ et C₆Cl₆ sur de l'aluminium à 600°C. Le C₆Cl₆ est complètement détruit et du carbone est précipité à la surface de l'aluminium. L'aluminium est régénéré par chauffage à 600°C en présence d'air pour oxyder le carbone. La demande de brevet japonais 31 451/66 du 29 mars 1966 décrit un procédé similaire mais en utilisant du fer à 850°C ou en faisant passer AlCl₃ contenant C₆Cl₆ dans un bain de zinc à 700°C.

Le brevet US 4.541.907 explique qu'en faisant passer de l'AlCl₃ contenant des impuretés organiques chlorées étant essentiellement de l'hexachlorobenzène C₆Cl₆ sur de l'alumine et du charbon en lit fluidisé on obtient un chlorure d'aluminium exempt de produits chlorés. Ces procédés ont l'inconvénient d'utiliser des températures élevées.

On peut utiliser aussi des procédés conventionnels de séparation basés sur les différences de température de sublimation et/ou d'ébullition ou encore l'absorption sur divers supports. Mais ces procédés ont l'inconvénient de purifier imparfaitement le chlorure d'aluminium et d'être des moyens non destructifs c'est-àdire qu'on obtient des produits riches en produits organiques chlorés qu'on ne sait pas traiter.

La demanderesse a trouvé un nouveau procédé pour purifier le chlorure l'aluminium anhydre contenant des produits organiques chlorés caractérisé :
a) en ce qu'on met en contact ledit chlorure d'aluminium avec un bain d'au moins un chloroaluminate.
b) puis qu'on récupère le chlorure d'aluminium dans la phase vapeur du bain de chloroaluminate.

Le chlorure d'aluminium anhydre contenant des produits organiques chlorés est appelé dans la suite du texte chlorure d'aluminium impur.

On peut utiliser différents chloroaluminates ou leurs mélanges, par exemple les chloroaluminates de potassium, de lithium, de sodium, de calcium, de strontium ou d'ammonium. Dans ce texte on appelle chloroaluminate un mélange quelconque de chlorure d'aluminium et d'un ou plusieurs chlorures métalliques.

Le chloroaluminate de sodium, qui est utilisé de préférence, désigne un mélange de chlorure d'aluminium et de chlorure de sodium dans des proportions quelconques et non pas seulement le mélange équimoléculaire.

Le chloroaluminate de sodium peut contenir aussi du chlorure de lithium et/ou de potassium. On peut aussi avoir un mélange quelconque de chlorure d'aluminiu, de chlorure de sodium et de chlorure de lithium qu'on appelle chloroaluminate de sodium et de lithium.

On préfère aussi que le chloroaluminate de sodium contienne au moins 50 % molaire de chlorure d'aluminium et présente un point de fusion inférieur à 200°C.

On peut utiliser un chloroaluminate plus riche en NaCl et en proportion telle que après mélange avec le chlorure d'aluminium impur on ait un chloraluminate de sodium contenant moins de 50 % molaire de NaCl et aussi les produits organiques chlorés.

L'invention s'intéresse à tous les produits organiques chlorés mais elle est utile surtout pour les produits aliphatiques chlorés ou perchlorés ayant plus de 2 atomes de carbone, les composés cycliques, hétérocycliques, aromatiques, mono ou polycycliques, et notamment les polychlorobiphényles.

Le chlorure d'aluminium impur peut être en phase gazeuse ou solide ou liquide. S'il est liquide ou solide il suffit de le verser dans le bain de chloraluminate en le maintenant liquide. Si le chlorure d'aluminium impur est en phase gazeuse on peut le mettre en contact avec le bain de chloroaluminate par tout moyen de mise en contact d'une phase liquide avec une phase gazeuse. Ce peut être une colonne à plateaux ou à garnissage ; on peut aussi, dans un bac agité de chloroaluminate introduire, le chlorure d'aluminium impur par un tuyau plongeur ou par un tuyau arrivant par le fond du bac.

Le chlorure d'aluminium se répartit entre la phase liquide et la phase gazeuse du chloroaluminate. Si le chlorure d'aluminium impur contient des inertes ou des incondensables tels que de l'azote, de l'air, de l'oxyde de carbone, ... ils restent dans la phase gazeuse. Les produits organiques chlorés se répartissent aussi entre la phase gazeuse et la phase liquide du chloroaluminate. On maintient le chlorure d'aluminium impur en contact avec le bain de chloroaluminate le temps nécessaire à la destruction des produits organiques chlorés. On obtient cette mise en contact par exemple dans une colonne à plateaux ou à garnissage dans laquelle on a un mélange continuel des phases liquides et gazeuses pour que tous les produits chlorés qu'on cherche à détruire soient bien en contact avec le bain de chloroaluminate. On peut aussi utiliser une cascade de réacteurs agités. On ajuste le temps de séjour en modifiant les débits et/ou les volumes de la colonne ou des réacteurs en cascade.

On peut opérer en discontinu ou en continu.

Bien qu'on puisse opérer à toute température pouvu que le chloroaluminate soit liquide, on préfère se placer au dessous de 300°C et de préférence entre 200 et 300°C.

La vitesse de destruction des produits chlorés, en particulier les aromatiques, augmente avec la température du bain de chloroaluminate. Le temps de séjour peut varier dans de larges limites mais est généralement compris entre quelques minutes et quelques heures.

On récupère le chlorure d'aluminium dans la phase gazeuse au-dessus du bain de chloroaluminate. Le moyen le plus simple est d'entrainer le chlorure d'aluminium par un courant de gaz sec puis de précipiter le chlorure d'aluminium pur sur une paroi froide à une température inférieure à la température de sublimation.

Le gaz sec peut être de l'air ou de l'azote. On peut trouver aussi dans la phase gazeuse en plus du chlorure d'aluminium et du gaz sec d'entraînement, des produits légers de décomposition des produits chlorés qui étaient à l'origine dans le chlorure d'aluminium impur, par exemple du tétrachlorure de carbone et/ou de l'exachloroéthane. Ce mélange gaz sec porteur, chlorure d'aluminium et produits légers peut être traité de manière connue pour récupérer le chlorure d'aluminium pur, par exemple par dépot sur une paroi froide. Il est essentiel de noter que les produits chlorés tels que les aromatiques et en particulier les polychlorobiphényles qui étaient dans le chlorure d'aluminium impur ont disparu et ne se retrouvent pas dans le chlorure d'aluminium qu'on récupère au-dessus du bain de chloroaluminate.

Quand on analyse le bain de chloroaluminate après avoir respecté le temps de séjour du chlorure d'aluminium impur, on ne trouve pas de trace des produits organiques chlorés tels que les aromatiques et les polychlorobiphényles.

On peut aussi purger périodiquement le bain de chloroaluminate pour éviter l'accumulation de produits très lourds et de poussière qui peuvent accompagner le chlorure d'aluminium impur.

Dans cette purge on ne retrouve aussi aucune trace de produits organiques chlorés, tels que des aromatiques ou des polychlorobiphényles.

Dans une mise en oeuvre préférée de l'invention, on ajoute au bain de chloroaluminate, un ou plusieurs métaux en poudre choisis parmi les métaux réducteurs tels que, par exemple, l'aluminium ou le zinc.

On préfère utiliser une poudre dont la granulométrie moyenne est inférieure à 500 µ.

Si on utilise des métaux on élimine complètement les produits organiques chlorés comme précédemment mais avec une vitesse nettement supérieure, de l'ordre de plusieurs fois à plusieurs dizaines de fois la vitesse précédente.

Lorsqu'on utilise d'autres métaux que l'aluminium il peut se former des chlorures de ces métaux qui passent en phase gazeuse avec le chlorure d'aluminium au-dessus du bain de chloroaluminate. Cette présence de chlorures d'autres métaux dans le chlorure d'aluminium peut être souhaitable pour certaines applications. Cependant le plus souvent on souhaite obtenir un chlorure d'aluminium pur. Quels que soient les chlorures de métaux qui s'ajoutent au chlorure d'aluminium on obtient toujours le résultat principal qui est la destruction des produits chlorés du type aromatique ou polychlorobiphényles contenus dans le chlorure d'aluminium impur.

On préfère utiliser l'aluminium en poudre.

Un autre avantage d'utiliser de l'aluminium est qu'on détruit le chlorure ferrique que peut éventuellement contenir le chlorure d'aluminium impur. Ce chlorure ferrique est transformé en chlorure ferreux qui précipite dans le bain de chloroaluminate.

On constate une consommation de poudre d'aluminium ce qui peut signifier que du chlorure d'aluminium s'est formé en prenant du chlore aux composés chlorés introduits avec le chlorure d'aluminium impur. Il n'y a pas de limite à la quantité de poudre d'aluminium, il suffit qu'il y en ait suffisament mais pas trop pour ne pas avoir de pertes importantes quand on purge le bain. On préfère mettre jusqu'à 5 ou 10 % en poids de poudre d'aluminium dans le bain de chloroaluminate. On constate que la vitesse de destruction des produits chlorés augmente avec la quantité de poudre d'aluminium et avec la température du bain de chloraluminate.

On préfère agiter le bain pour que la poudre de métal soit bien dispersée dans le bain.

Les exemples suivants illustrent l'invention sans la limiter.

## EXEMPLE 1

Dans une enceinte en acier inoxydable de 1,5 litres chauffée par un bain de sable, munie d'un agitateur à hélices à 6 pales tournant à 400 tours/minute et équipée de chicanes on introduit 900 g de chloraluminate de sodium à 65 % molaire en $AlCl_3$. Puis on ajoute 200 g de chlorure d'aluminium impur contenant les produits suivants (teneur exprimée en ppm) :

Tétrachlorobenzène 60 Perchlorobenzonitrile 30
Pentachlorobenzène 220 Perchlorostyrène 10
Hexachlorobenzène 570 Decachlorobiphényle 65

On ajoute 45 g de poudre d'aluminium fine (type PECHINEY XY 49) et on chauffe le mélange à 200°C, à cette température on note le temps t = 0, puis on maintient ce bain agité à cette température. A différents temps on soutire un échantillon du bain de chloroaluminate en phase liquide que l'on refroidit aussitôt en même temps qu'on sublime à l'aide d'un courant d'azote dans le bain de chloroaluminate un peu de AlCl$_3$ que l'on récupère dans une capacité en pyrex refroidie. A la fin de l'essai on sublime de la même manière les 200 g d'AlCl$_3$ que l'on avait introduits au début de l'essai.

Les résultats sont présentés dans le tableau 1 ci-joint. Les chlorbenzènes sont désignés par leur formule, PCBN désigne les perchlorobenzonitrile, PS le perchlorostyrène et DCBP le décachlorobiphényle.

### EXEMPLE 2

On opère comme dans l'exemple 1 mais à 225°C. Le temps t = 0 est mesuré au moment où le bain de chloroaluminate atteint 225°C.

Les résultats sont présentés sur le tableau 2.

### EXEMPLE 3

On opère comme dans l'exemple 1 mais à 250 °C. Le temps t = 0 est mesuré au moment où le bain de chloroaluminate atteint 250°C.

Les résultats sont présentés sur le tableau 3.

### EXEMPLE 4

On opére quatre fois comme dans l'exemple 1 mais chaque fois avec différentes quantités de poudre d'aluminium. On chauffe le mélange à 200°C, à cette température on note le temps t = 0. A t = 1$^h$ on mesure les concentrations de produits chlorés dans le chloroalumiate et dans le phase gazeuse.

Les résultats sont présentés sur le tableau 4.

TABLEAU 1

| | Concentration en ppm | | | | | | | |
|---|---|---|---|---|---|---|---|---|
| | Dans le chloroaluminate | | | | | Dans $AlCl_3$ phase gazeuse du chloroaluminate | | |
| Temps t | 0 | 15' | 30' | 1h | 2h | 1h | 2h | |
| $C_6H_2Cl_4$ | 9 | 11 | 16 | 20 | 11 | 15 | 20 | |
| $C_6H Cl_5$ | 48 | 50 | 62 | 40 | 13 | 60 | 25 | |
| $C_6Cl_6$ | 50 | 37 | 33 | 15 | 2,5 | 20 | 4 | |
| PCBN | | | | 0,8 | 0,5 | 0,7 | 0,5 | |
| PS | | | | | 0,01 | 0,02 | 0,04 | |
| DCBP | 2,5 | 2 | 0,7 | 0,5 | 0,8 | 0,03 | 0,03 | |

– Température du bain de chloroaluminate : 200°C

– % d'aluminium en poudre dans le bain initial
avant introduction du $AlCl_3$ impur = 5%

TABLEAU 2

| | Concentration en ppm | | | | | | | |
| --- | --- | --- | --- | --- | --- | --- | --- | --- |
| | Dans le chloroaluminate | | | | | Dans AlCl$_3$ phase gazeuse du chloroaluminate | | |
| Temps t | 0 | 15' | 30' | 1h | 2h | 30' | 1h | 2h |
| C$_6$H$_2$Cl$_4$ | 10 | 14 | 12 | 2 | 2 | 13 | 6 | 2 |
| C$_6$H Cl$_5$ | 47 | 43 | 20 | 6,2 | 0,8 | 38 | 6 | 0,6 |
| C$_6$Cl$_6$ | 47 | 20 | 5 | 1,1 | 0,2 | 8 | 1 | 0,4 |
| PCBN | | 1 | 0,3 | 0,2 | 0,1 | 0,5 | 0,1 | 0,02 |
| PS | | | | 0,04 | | | | |
| DCBP | 2,7 | 0,6 | 0,15 | 0,04 | 0,01 | 0,01 | 0,02 | 0,04 |

- Température du bain de chloroaluminate = 225°C
- % d'aluminium en poudre dans le bain initial avant introduction du AlCl$_3$ impur = 5%

TABLEAU 3

| | Concentration en ppm | | | | | | | |
|---|---|---|---|---|---|---|---|---|
| | Dans le chloroaluminate | | | | | Dans $AlCl_3$ phase gazeuse du chloroaluminate | | |
| Temps t | 0 | 12' | 30' | 1h | 2h | 12' | 1h | 2h |
| $C_6H_2Cl_4$ | 3,5 | 8 | 0,13 | | | 20 | 0,03 | |
| $C_6H\,Cl_5$ | 18 | 15 | 0,16 | 0,06 | 0,03 | 51 | 0,1 | 0,8 |
| $C_6Cl_6$ | 19 | 3,5 | 0,25 | 0,01 | 0,05 | 10 | 0,1 | 0,1 |
| PCBN | 0,6 | 0,4 | 0,02 | | | 1,4 | | |
| PS | | | | | | | | |
| DCBP | 1,7 | 0,1 | 0,05 | 0,02 | 0,02 | 0,5 | | 0,05 |

- Température du bain de chloroaluminate = 250°C
- % d'aluminium en poudre dans le bain initial avant introduction du $AlCl_3$ impur = 5%

TABLEAU 4

| | Concentration en ppm mesurées à t = 1 heure | | | | |
|---|---|---|---|---|---|
| | Dans le chloroaluminate | | | | Dans $AlCl_3$ phase gazeuse du chloroaluminate |
| % Aluminium* | 0 | 5 | 10 | 15 | 0 |
| $C_6H_2Cl_4$ | 0,6 | 20 | 6 | 2 | |
| $C_6H\ Cl_5$ | 25 | 40 | 3 | 2 | 96 |
| $C_6Cl_6$ | 70 | 15 | 1 | 0,6 | 150 |
| PCBN | | 0,8 | 0,4 | 0,3 | |
| PS | | | | 0,01 | |
| DCBP | 5 | 0,5 | 0,04 | 0,03 | 1 |

    — Température du bain de chloroaluminate = 200°C

    — * en poudre exprimé en pourcentage du bain initial avant introduction du $AlCl_3$ impur

## Revendications

    1. Procédé de purification du chlorure d'aluminium anhydre contenant des produits organiques chlorés caractérisé en ce que :

    a/ on met en contact ledit chlorure d'aluminium avec un bain d'au moins un chloraluminate.

    b/ puis qu'on récupère le chlorure d'aluminium dans la phase vapeur du bain de chloroaluminate.

    2. Procédé selon le revendication 1 caractérisé en ce que le chloroaluminate est un chloroaluminate de sodium.

    3. Procédé selon le revendication 1 ou 2 caractérisé en ce qu'on ajoute au moins un métal réducteur sous forme de poudre dans le bain de chloraluminate.

    4. Procédé selon le revendication 3 caractérisé en ce que le métal est de l'aluminium.

    5. Procédé selon l'une des revendications 1 à 4 caractérisé en ce que la température du bain de chloraluminate est inférieure à 300°C et de préférence comprise entre 200 et 300°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, vol. 96, no. 8, février 1982, page 153, résumé no. 54731q, Columbus, Ohio, US; & SU-A-859 301 (B.S. POVAZHNYI et al.) 31-08-1981 * Résumé * | 1-5 | C 01 F   7/62 |
| X | CHEMICAL ABSTRACTS, vol. 69, no. 12, 1968, page 4226, résumé no. 44947t, Columbus, Ohio, US; & SU-A-214 526 (D.A. BEREZOVSKII et al.) 29-03-1968 * Résumé * | 1,5 | |
| A | GB-A- 342 208  (JAMES YATES JOHNSON) * Page 2, exemple * | 1-4 | |
| A | US-A-3 832 452  (DELL A. CROUCH) | | |
| A | DE-A-2 014 772  (BRITISH TITAN PRODUCTS) * Pages 12,13, revendications 1-9 * | 1-5 | |

**DOMAINES TECHNIQUES RECHERCHES (Int. Cl.4)**

C 01 F

Le présent rapport a été établi pour toutes les revendications

| Lieu de la recherche | Date d'achèvement de la recherche | Examinateur |
|---|---|---|
| LA HAYE | 18-04-1988 | LIBBERECHT-VERBEECK E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)